# EUROPEAN PATENT SPECIFICATION

(11) **EP 4 394 311 B1**
(45) Date of publication and mention of the grant of the patent: **02.12.2026**
(21) Application number: 22216686.0
(22) Date of filing: 27.12.2022
(51) Int. Cl.: G01B 11/06, G01B 11/25, G02B 21/00

(54) **METHOD FOR STRUCTURED ILLUMINATION MICROSCOPY AND STRUCTURED ILLUMINATION MICROSCOPE**
VERFAHREN ZUR MIKROSKOPIE MIT STRUKTURIERTER BELEUCHTUNG UND MIKROSKOP MIT STRUKTURIERTER BELEUCHTUNG
PROCÉDÉ DE MICROSCOPIE À ÉCLAIRAGE STRUCTURÉ ET MICROSCOPE À ÉCLAIRAGE STRUCTURÉ

(43) Date of publication of application: 03.07.2024
(73) Proprietor: Mitutoyo Corporation, Kawasaki-shi, Kanagawa 213-8533 (JP)
(72) Inventor: ENTINK, Bart Geert, Eindhoven (NL)
(74) Representative: EP&C

(56) References cited:
- JP-A- 2010 281 665
- US-A1- 2012 140 243

## Description

The current invention relates to a method of structured illumination microscopy for determining a height map of a test surface wherein use is made of a structured illumination microscope. The invention is further related to a structured illumination microscope for determining a height map of a test surface.

In known methods of structured illumination microscopy for determining a height map of a test surface a light beam is modulated to form a pattern which is projected onto the test surface. The light beam may be modulated by a spatial light modulator. During measurement, the pattern may be phase shifted in a direction perpendicular to the light beam according to the phase of the pattern to allow for determining the height of the test surface.

The kind of pattern to be used, for example fringe patterns, grid patterns, or fractal patterns, is dependent on the test surface, e.g. a flat test surface, or a curved test surface, such as a lens, and the specific instrument setup used, which dependency has an effect on the results. For example, a measurement pattern with small features may result in a high scanning-axis resolution, while a measurement pattern with large features may result in a low scanning-axis resolution.

Since the measurement with the structured illumination microscope may depend on the measurement pattern that is used, multiple measurements may be required to determine a height map of a test surface. For example, for a sloped test surface, such as a lens, multiple measurements may be required because areas with higher slope may be best measured with measurement patterns having a larger fringe width, whereas areas with a lower slope may be best measured with measurement patterns having a smaller fringe width. In another example, the test surface is tilted and patterns having periodicities along a direction of the tilt and perpendicular to the direction of the tilt may be required to determine the height map of the titled test surface.

US2012/0140243 A1 discloses a method for forming a three-dimensional image of a test object that includes directing light to a surface of best-focus of an imaging optic, where the light has an intensity modulation in at least one direction in the surface of best-focus. Multiple illumination patterns may be combined into a single pattern that is projected onto the sample object.

JP2010281665A relates to a phase shift image pickup apparatus provided with an illumination part which irradiates the illumination light which has a distribution of a predetermined brightness to an imaging object.

A downside of the known methods is that errors may be introduced in determining the height map due to multiple measurements having to be performed.

The aim of the invention is to reduce errors in methods of structured illumination microscopy for determining a height map.

The aim of the invention is achieved by the method of claim 1.

The test surface may be any test surface suitable for determining a height map thereof. For example, the test surface may be a curved test surface such as a lens. The test surface may also be tilted relative to a scanning direction of the microscope. The test surface may be opaque or transparent.

Use is made of a structured illumination microscope comprising a light source for emitting a light beam. For example, the light source may be a laser beam, e.g. emitting light of a specific frequency. The light source may also be a white light source, emitting light of many frequencies, e.g. emitting white light. The emitted light beam follows a light path from the light source to the test surface where it is reflected towards an optical detector.

The microscope further comprises a spatial light modulator for modulating the light beam emitted by the light source. The spatial light modulator may allow for many different modulations of the light beam, such as modulations resulting in different fringe patterns, different grid patterns, or different fractal patterns. The spatial light modulator may be configured to dynamically change the modulation of the light beam.

The microscope further comprises a test surface holder for holding a test surface of which a height map is to be determined. The test surface holder may hold the test surface perpendicular to a light path of the light beam or tilted relative to the light path.

Scanning means are provided to direct the modulated light beam to the test surface in the test surface holder. The scanning means may comprise optical means for directing the light beam, such as lenses. The scanning means and the test surface holder are moveable relative to each other between different scanning positions in a direction parallel to the light beam. For example, in an embodiment the test surface is perpendicular to the light beam and the scanning means are moved between different heights above the test surface in a direction perpendicular to the test surface. This allows for measuring reflected light from the test surface at different positions above the test surface in the test surface holder.

The microscope further comprises an optical detector for detecting a reflected light beam. The reflected light beam is reflected by the test surface provided in the test surface holder. The optical detector may be a camera adapted for measuring the reflected light beam. The reflected light beam may be directed towards the optical detector using optical means for directing the light beam, such as lenses.

The microscope further comprises a processor connected to the spatial light modulator, for operating the spatial light modulator, to the scanning means, for operating the scanning means, and to the optical detector, for operating the optical detector and receiving a measured signal of the optical detector.

The method comprises providing the test surface in the test surface holder of the structured illumination microscope for determining the height map of the test surface. The method further comprises emitting a light beam from the light source and modulating the emitted light beam with the spatial light modulator. The emitted light beam is modulated to generate a measurement pattern which is periodic in a direction perpendicular to the light beam and which measurement pattern has a measurement phase. The measurement phase is related to the amount of phase shifts of the pattern required to complete a full cycle of the pattern such that the pattern is the same as before performing the phase shifts.

As discussed above many different patterns may be obtained. The pattern is periodic in a direction perpendicular to the light beam. For example, the pattern may be a periodic sinusoidal pattern having straight darker and lighter lines. This pattern is periodic in a direction perpendicular to the straight darker and lighter lines, but not in a direction parallel to these lines.

The method further comprises moving the scanning means between the different scanning positions and modulating the light beam with the spatial light modulator such that the measurement pattern is phase shifted in the direction perpendicular to the light beam according to the measurement phase. Thus, during performing the method and measuring the reflected light beam, the measurement pattern is phase shifted such that measurements are performed for different shifts of the pattern and, additionally, for different scanning positions of the scanning means. The measurement pattern is phase shifted according to the measurement pattern phase. For example, if the measurement pattern has a measurement pattern phase of n phases than the measurement pattern may be shifted n times during measurement to return the pattern to its original position.

The reflected light beam is detected with the optical detector for each scanning position and each phase shift, which results in a detected signal, e.g. in each pixel of the optical detector. The detected signal is then send to the processor for determining the height map of the test surface. The height map is determined by determining a height of the test surface, e.g. for each pixel of the optical detector, based on the detected signal. For example, the height map may be determined based on determining an amplitude of the detected signal at a corresponding signal and determining a scanning position of the scanning means for which the amplitude is maximal. The scanning position for which the amplitude is maximal is then related to the height of the test surface at the respective pixel.

The light beam is modulated such that the measurement pattern is a superposition of at least a first periodic pattern having a first phase and a second periodic pattern having a second phase. The first phase and the second phase are different from each other. The measurement pattern phase is an integer multiple of the least common multiple of the first phase and the second phase. For example, the first phase may be a 3 phase and the second phase may be a 4 phase in which case the measurement pattern phase is a 12 phase requiring 12 phase shifts to complete a full cycle.

Thus, the measurement pattern is a superposition of at least two different patterns and the measurement pattern is shifted according to the phase shifts of the superposed patterns. By appropriately choosing the first periodic pattern and the second periodic pattern the resulting measurement pattern may have improved characteristics for determining a height map of the test surface compared to a randomly chosen measurement pattern. For example, the measurement pattern may be a superposition of a first periodic pattern having a large fringe width and a second periodic pattern having a small fringe width to allow for simultaneous measurement of areas of a test surface having higher slopes and lower slopes. Thus, a single measurement cycle is needed to measure the test surface and errors resulting from performing multiple measurement cycles with multiple measurement patterns are reduced.

The determining of the height map further comprises, for each pixel of the optical detector:
- performing a Fourier transformation on the detected signal transforming the detected signal to frequency space;
- separating the detected signal into a first presignal related to the first periodic pattern and a second presignal related to the second periodic pattern;
- performing an inverse Fourier transformation independently on each of the first presignal and the second presignal;
- determining a first premap by determining a height of the test surface based on the first presignal, e.g. by determining a first amplitude of the first signal at each pixel and determining a scanning position wherein the first amplitude is maximal;
- determining a second premap by determining a height of the test surface based on the second presignal, e.g. by determining a second amplitude of the second presignal at each pixel and determining a scanning position wherein the second amplitude is maximal; and
- determining the height map based on the first premap and the second premap.

An advantage of using a measurement pattern that is a superposition of two periodic patterns having different phases is that the detected signal may be separated in frequency space in a first presignal arising from the periodic pattern having the first phase and a second presignal arising from the second pattern having the second phase. Thus by performing a Fourier transformation on the detected signal the detected signal may be separated into the first presignal, related to the first periodic pattern, and the second presignal, related to the second periodic pattern. An inverse Fourier transformation is then performed independently on each of the first presignal and the second presignal to obtain a first presignal in coordinate space, related to the first periodic pattern, and a second presignal in coordinate space, related to the second periodic pattern. For each presignal a premap may be determined wherein using the first periodic pattern may result in a first premap having first characteristics and using the second periodic pattern may have result in a second premap having second characteristics. The height map is then determined based on the first premap and the second premap. The resulting height map may have advantageous characteristics of the first premap and the second premap.

A potential downside of determining a height map using structured illumination microscopy is a longer throughput time, which may increase due to a larger amount of phase shifts required. In embodiments, the throughput time is reduced by taking, at each scanning position only a single image and wherein the measurement pattern is phase shifted with a single phase between scanning positions. The height map in these embodiments may be determined based on determining an amplitude of the detected signal at the corresponding pixel and determining a scanning position wherein the amplitude is maximal. The scanning position wherein the amplitude is maximal is the scanning position wherein the test surface is in focus of the microscope which allows to determine the height map.

In embodiments, the measurement pattern, the first periodic pattern, and/or the second periodic pattern is a sinusoidal periodic pattern, a binary strip pattern, or a periodic circular pattern.

In embodiments, the first periodic pattern has a larger fringe width and the second periodic pattern has a smaller fringe width.

In embodiments, the first periodic pattern is periodic in a first direction parallel to the test surface and the second periodic pattern is periodic in a second direction parallel to the test surface, e.g. wherein the first direction is perpendicular to the second direction, and wherein phase shifting comprises phase shifting the measurement pattern in the first direction parallel to the test surface and in the second direction parallel to the test surface according to the respective phases.

The invention further relates to a structured illumination microscope for determining a height map of a test surface comprising:
- a light source for emitting a light beam;
- a spatial light modulator for modulating the light beam emitted by the light source;
- a test surface holder for holding a test surface;
- scanning means to direct the modulated light beam to the test surface in the test surface holder, wherein the scanning means and the test surface holder are movable relative to each other between different scanning positions in a direction parallel to the light beam;
- an optical detector for detecting a reflected light beam reflected by a test surface provided in the test surface holder; and
- a processor connected to the spatial light modulator, the scanning means, and the optical detector,
wherein the microscope is configured to, when the test surface is provided in the test surface holder, comprises:
- emit a light beam from the light source and modulate the light beam emitted by the light source with the spatial light modulator to generate a measurement pattern which is periodic in a direction perpendicular to the light beam and which measurement pattern has a measurement pattern phase;
- direct the modulated light beam to the test surface with the scanning means;
- move the scanning means between the different scanning positions and modulating the light beam with the spatial light modulator such that the measurement pattern is phase shifted in the direction perpendicular to the light beam according to the measurement pattern phase;
- detect the reflected light beam for each scanning position and each phase shift with the optical detector resulting in a detected signal in each pixel of the optical detector; and
- determine, by the processor, a height map of the test surface by determining a height of the test surface based on the detected signal, e.g. based on determining an amplitude of the detected signal at the corresponding pixel and determining a scanning position wherein the amplitude is maximal,
wherein the light beam is modulated such that the measurement pattern is a superposition of at least a first periodic pattern having a first phase and a second periodic pattern having a second phase, wherein the first phase and the second phase are different from each other, and wherein the measurement pattern phase is an integer multiple of the least common multiple of the first phase and the second phase.

The processor is configured to, when determining the height map, for each pixel of the optical detector:
- perform a Fourier transformation on the detected signal transforming the detected signal to frequency space;
- separate the detected signal into a first presignal related to the first periodic pattern and a second presignal related to the second periodic pattern;
- perform an inverse Fourier transformation independently on each of the first presignal and the second presignal;
- determine a first premap by determining a height of the test surface based on the first presignal, e.g. by determining a first amplitude of the first signal at each pixel and determine a scanning position wherein the first amplitude is maximal;
- determining a second premap by determining a height of the test surface based on the presecond signal, e.g. by determining a second amplitude of the second signal at each pixel and determining a scanning position wherein the second amplitude is maximal; and
- determine the height map based on the first premap and the second premap.

In embodiments of the microscope, the microscope is configured to take only a single image at each scanning position and wherein the microscope is configured to phase shift the measurement with a single phase between scanning positions.

In embodiments of the microscope, the first periodic pattern, and/or the second periodic pattern is a sinusoidal periodic pattern, a binary strip pattern, or a periodic circular pattern.

In embodiments of the microscope, the first periodic pattern has a larger fringe width and the second periodic pattern has a smaller fringe width.

In embodiments of the microscope, the first periodic pattern is periodic in a first direction parallel to the test surface and the second periodic pattern is periodic in a second direction parallel to the test surface, e.g. wherein the first direction is perpendicular to the second direction, and wherein the structured illumination microscope is configured to phase shift the measurement pattern in the first direction parallel to the test surface and in the second direction parallel to the test surface according to the respective phases.

The invention will now be explained with reference to the drawing, in which:
- Fig. 1 shows a structured illumination microscope;
- Fig. 2 shows a first periodic pattern, a second periodic pattern, and a resulting superposed pattern; and
- Fig. 3 shows a Fourier transformed detected signal.

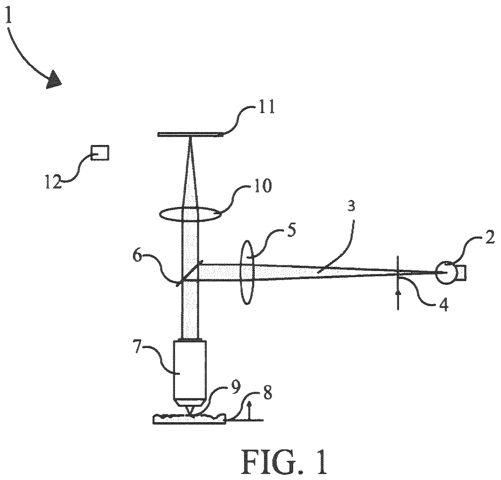

Figure 1 shows a structured illumination microscope 1 comprising a light source 2 for emitting a light beam 3. The structured illumination microscope 1 is configured for determining a height map of the test surface 8.

The light beam 3 emitted by the light source 2 is modulated by the spatial light modulator 4. The spatial light modulator 4 is configured to modulate the light beam 3 to generate a measurement pattern which is periodic in a direction perpendicular to the light beam 3. The thus generated measurement pattern has a measurement pattern phase which is a superposition of at least a first periodic pattern having a first phase and a second periodic pattern having a second phase. For example, the first phase may be a 3 phase and the second phase may be a 4 phase, such that the measurement pattern has a 12 phase.

The light beam is directed by the lens 5 and the reflective element 6 towards the scanning means 7 which direct the light beam 3 to the test surface 8 in the test surface holder. The test surface 8 and the scanning means 7 are moveable relative to each other between different scanning positions in a direction parallel to the light beam 3. The scanning means 7 may direct the light beam 3 towards the test surface 8 to test point 9 to measure the height thereof.

The test surface 8 reflects the light beam 3 via reflective means 6 and lens 10 towards the optical detector 11 for detecting the reflected light beam 3. The processor 12 is connected to the optical detector 11, for determining the height map.

The microscope 1 is configured to, when the test surface 8 is provided in the test surface holder, comprises:
- emit the light beam 3 from the light source 2 and modulate the light beam 3 emitted by the light source 2 with the spatial light modulator 4 to generate a measurement pattern which is periodic in a direction perpendicular to the light beam 3 and which measurement pattern has a measurement pattern phase;
- direct the modulated light beam 3 to the test surface 8 with the scanning means 7;
- move the scanning means 7 between the different scanning positions and modulating the light beam 3 with the spatial light modulator 4 such that the measurement pattern is phase shifted in the direction perpendicular to the light beam 3 according to the measurement pattern phase;
- detect the reflected light beam 3 for each scanning position and each phase shift with the optical detector 11 resulting in a detected signal in each pixel of the optical detector 11; and
- determine, by the processor 12, a height map of the test surface 8 by determining a height of the test surface 8 based on the detected signal, e.g. based on determining an amplitude of the detected signal at the corresponding pixel and determining a scanning position wherein the amplitude is maximal.

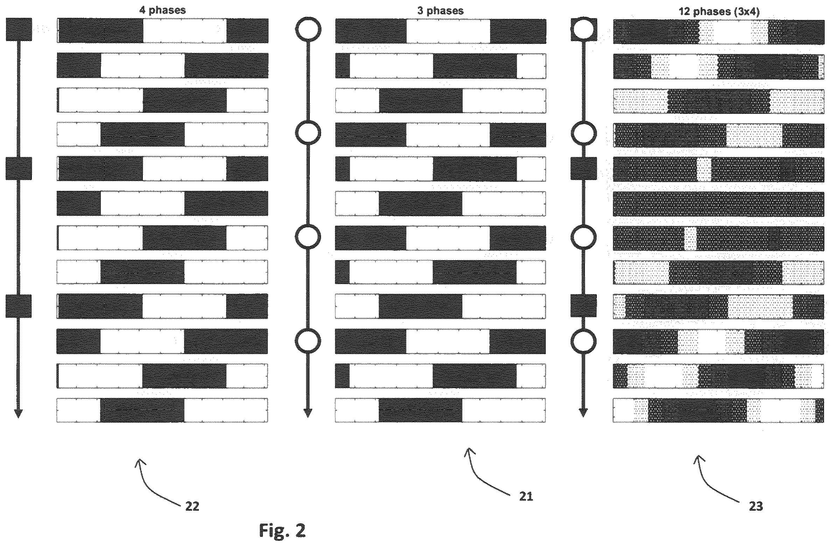

Figure 2 shows a first periodic pattern 21 having a three phase, a second periodic pattern 22 having a four phase, and a resulting superposed pattern 23 having a twelve phase. As can be seen from the figure the first periodic pattern 21 has to be shifted three times before a cycle is completed, i.e. after three phase shifts, the first periodic pattern 21 returns to the unshifted first periodic pattern 21. Similarly, the second periodic pattern 22 having the four phase has to be shifted four times before a cycle is completed.

The resulting superimposed pattern 23 is a superposition of the three phase pattern 21 and the four phase pattern 22 and has a resulting twelve phase. Thus the measurement pattern, which is the superimposed pattern, 23 has to be shifted twelve times before the cycle is completed.

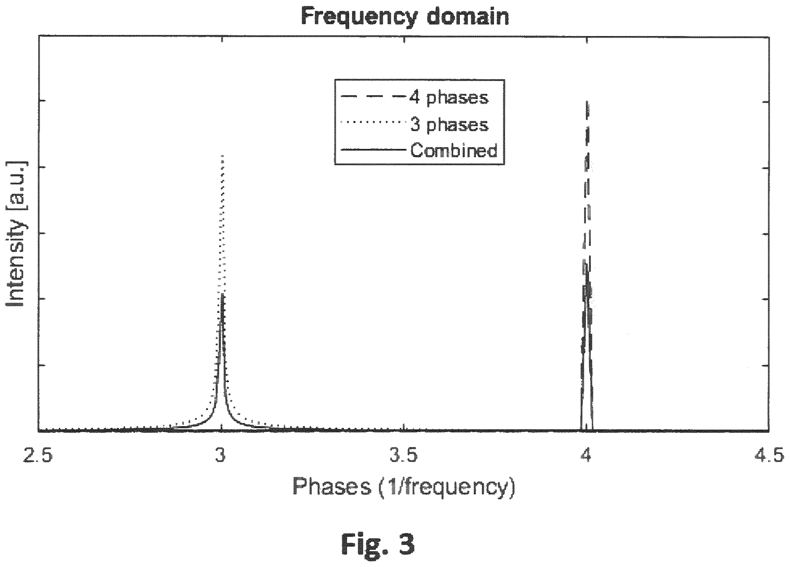

Figure 3 shows the separatable signal after Fourier transformation obtained from a measurement of the measurement pattern 23, wherein the signal has a twelve phase. Figure 3 further shows a detected signal if only the three phase pattern 21 were used and a detected signal if only the four phase pattern 22 were used.

As can be seen in figure 3, the measurement pattern 23 contains information from both the first periodic pattern 21 and the second periodic pattern 22. Thus the measurement pattern 23 may be used to determine a height map instead of using separately the three phase pattern 21 and the four phase 22. Since the measurement does not have to be repeated for different patterns, errors resulting from performing multiple measurements may be reduced and the resulting height map may be more accurate. Other periodic patterns having other phases or characteristics, such as a repeated square pattern, a circular symmetric pattern, may equally be used in the method.

## Claims

1. Method for determining a height map of a test surface (8) wherein use is made of a structured illumination microscope (1) comprising:
- a light source (2) for emitting a light beam (3);
- a spatial light modulator (4) for modulating the light beam emitted by the light source
- a test surface holder for holding a test surface (8);
- scanning means (7) to direct the modulated light beam to the test surface in the test surface holder, wherein the scanning means and the test surface holder are movable relative to each other between different scanning positions in a direction parallel to the light beam;
- an optical detector (11) for detecting a reflected light beam reflected by a test surface provided in the test surface holder; and
- a processor (12) connected to the optical detector,
wherein the method comprises:
- providing the test surface in the test surface holder of the structured illumination microscope;
- emitting a light beam from the light source and modulating the light beam emitted by the light source with the spatial light modulator to generate a measurement pattern (23) which is periodic in a direction perpendicular to the light beam and which measurement pattern has a measurement pattern phase;
- directing the modulated light beam to the test surface with the scanning means;
- moving the scanning means between the different scanning positions and modulating the light beam with the spatial light modulator such that the measurement pattern is phase shifted in the direction perpendicular to the light beam according to the measurement pattern phase;
- detecting the reflected light beam for each scanning position and each phase shift with the optical detector resulting in a detected signal, e.g. in each pixel of the optical detector; and
- determining a height map of the test surface, by the processor, by determining a height of the test surface based on the detected signal, e.g. based on determining an amplitude of the detected signal at the corresponding pixel and determining a scanning position wherein the amplitude is maximal,
wherein the light beam is modulated such that the measurement pattern (23) is a superposition of at least a first periodic pattern (21) having a first phase and a second periodic pattern (22) having a second phase,
wherein the first phase and the second phase are different from each other, and
**characterized in that** the measurement pattern phase is an integer multiple of the least common multiple of the first phase and the second phase,
wherein the determining of the height map further comprises, for each pixel of the optical detector:
- performing a Fourier transformation on the detected signal transforming the detected signal to frequency space;
- separating the detected signal into a first presignal related to the first periodic pattern (21) and a second presignal related to the second periodic pattern (22);
- performing an inverse Fourier transformation independently on each of the first presignal and the second presignal;
- determining a first premap by determining a height of the test surface based on the first presignal, e.g. by determining a first amplitude of the first presignal at each pixel and determining a scanning position wherein the first amplitude is maximal;
- determining a second premap by determining a height of the test surface based on the second presignal, e.g. by determining a second amplitude of the second signal at each pixel and determining a scanning position wherein the second amplitude is maximal; and
- determining the height map based on the first premap and the second premap.

2. Method according to claim 1, wherein at each scanning position only a single image is taken and wherein the measurement pattern is phase shifted with a single phase between scanning positions.

3. Method according to one or more of the preceding claims, wherein the measurement pattern, the first periodic pattern, and/or the second periodic pattern is a binary strip pattern, or a sinusoidal periodic pattern.

4. Method according to one or more of the preceding claims, wherein the first periodic pattern has a larger fringe width and the second periodic pattern has a smaller fringe width.

5. Method according to one or more of the preceding claims, wherein the first periodic pattern is periodic in a first direction parallel to the test surface and the second periodic pattern is periodic in a second direction parallel to the test surface, e.g. wherein the first direction is perpendicular to the second direction, and wherein phase shifting comprises phase shifting the measurement pattern in the first direction parallel to the test surface and in the second direction parallel to the test surface according to the respective phases.

6. Structured illumination microscope (1) for determining a height map of a test surface comprising:
- a light source (2) for emitting a light beam (3);
- a spatial light modulator (4) for modulating the light beam emitted by the light source
- a test surface holder for holding a test surface (8);
- scanning means (7) to direct the modulated light beam to the test surface in the test surface holder, wherein the scanning means and the test surface holder are movable relative to each other between different scanning positions in a direction parallel to the light beam;
- an optical detector (11) for detecting a reflected light beam reflected by a test surface provided in the test surface holder; and
- a processor (12) connected to the spatial light modulator, the scanning means, and the optical detector,
wherein the microscope is configured to, when the test surface is provided in the test surface holder:
- emit a light beam (3) from the light source and modulate the light beam emitted by the light source with the spatial light modulator to generate a measurement pattern (23) which is periodic in a direction perpendicular to the light beam and which measurement pattern has a measurement pattern phase;
- direct the modulated light beam to the test surface with the scanning means;
- move the scanning means between the different scanning positions and modulating the light beam with the spatial light modulator such that the measurement pattern is phase shifted in the direction perpendicular to the light beam according to the measurement pattern phase;
- detect the reflected light beam for each scanning position and each phase shift with the optical detector resulting in a detected signal; and
- determine, by the processor, a height map of the test surface by determining a height of the test surface based on the detected signal, e.g. based on determining an amplitude of the detected signal at the corresponding pixel and determining a scanning position wherein the amplitude is maximal,
wherein the light beam is modulated such that the measurement pattern (23) is a superposition of at least a first periodic pattern (21) having a first phase and a second periodic pattern (22) having a second phase,
wherein the first phase and the second phase are different from each other, and
**characterized in that** the measurement pattern phase is an integer multiple of the least common multiple of the first phase and the second phase,
wherein the processor is configured to, when determining the height map, for each pixel of the optical detector:
- perform a Fourier transformation on the detected signal transforming the detected signal to frequency space;
- separate the detected signal into a first presignal related to the first periodic pattern and a second presignal related to the second periodic pattern;
- perform an inverse Fourier transformation independently on each of the first presignal and the second presignal;
- determine a first premap by determining a height of the test surface based on the first presignal, e.g. by determining a first amplitude of the first signal at each pixel and determine a scanning position wherein the first amplitude is maximal;
- determining a second premap by determining a height of the test surface based on the presecond signal, e.g. by determining a second amplitude of the second signal at each pixel and determining a scanning position wherein the second amplitude is maximal; and
- determine the height map based on the first premap and the second premap.

7. Structured illumination microscope according to claim 6, wherein the microscope is configured to take only a single image at each scanning position and wherein the microscope is configured to phase shift the measurement with a single phase between scanning positions.

8. Structured illumination microscope according to one or more of claims 6 - 7, the first periodic pattern, and/or the second periodic pattern is a binary strip pattern, or a sinusoidal periodic pattern.

9. Structured illumination microscope according to one or more of claims 6 - 8, wherein the first periodic pattern has a larger fringe width and the second periodic pattern has a smaller fringe width.

10. Structured illumination microscope according to one or more of claims 6 - 9, wherein the first periodic pattern is periodic in a first direction parallel to the test surface and the second periodic pattern is periodic in a second direction parallel to the test surface, e.g. wherein the first direction is perpendicular to the second direction, and wherein the structured illumination microscope is configured to phase shift the measurement pattern in the first direction parallel to the test surface and in the second direction parallel to the test surface according to the respective phases.

## Patentansprüche

1. Verfahren zum Bestimmen einer Höhenkarte einer Prüffläche (8), wobei ein Mikroskop (1) mit strukturierter Beleuchtung verwendet wird, das Folgendes umfasst:
- eine Lichtquelle (2) zum Emittieren eines Lichtstrahls (3);
- einen räumlichen Lichtmodulator (4) zum Modulieren des durch die Lichtquelle emittierten Lichtstrahls;
- einen Prüfflächenhalter zum Halten einer Prüffläche (8);
- Abtastmittel (7), um den modulierten Lichtstrahl auf die Prüffläche in dem Prüfflächenhalter zu richten, wobei die Abtastmittel und der Prüfflächenhalter in einer Richtung parallel zu dem Lichtstrahl relativ zueinander zwischen unterschiedlichen Abtastpositionen beweglich sind;
- einen optischen Detektor (11) zum Detektieren eines reflektierten Lichtstrahls, der durch eine in dem Prüfflächenhalter bereitgestellte Prüffläche reflektiert wird; und
- einen Prozessor (12), der mit dem optischen Detektor verbunden ist,
wobei das Verfahren Folgendes umfasst:
- Bereitstellen der Prüffläche in dem Prüfflächenhalter des Mikroskops mit strukturierter Beleuchtung;
- Emittieren eines Lichtstrahls von der Lichtquelle und Modulieren des durch die Lichtquelle emittierten Lichtstrahls mit dem räumlichen Lichtmodulator, um ein Messmuster (23) zu erzeugen, das in einer Richtung senkrecht zu dem Lichtstrahl periodisch ist, und wobei das Messmuster eine Messmusterphase aufweist;
- Richten des modulierten Lichtstrahls auf die Prüffläche mit den Abtastmitteln;
- Bewegen der Abtastmittel zwischen den unterschiedlichen Abtastpositionen und Modulieren des Lichtstrahls mit dem räumlichen Lichtmodulator derart, dass das Messmuster in der Richtung senkrecht zu dem Lichtstrahl gemäß der Messmusterphase phasenverschoben wird;
- Detektieren des reflektierten Lichtstrahls für jede Abtastposition und jede Phasenverschiebung mit dem optischen Detektor, wodurch sich ein detektiertes Signal, z. B. in jedem Pixel des optischen Detektors, ergibt; und
- Bestimmen einer Höhenkarte der Prüffläche durch den Prozessor durch Bestimmen einer Höhe der Prüffläche basierend auf dem detektierten Signal, z. B. basierend auf einem Bestimmen einer Amplitude des detektierten Signals an dem entsprechenden Pixel und Bestimmen einer Abtastposition, in der die Amplitude maximal ist,
wobei der Lichtstrahl derart moduliert wird, dass das Messmuster (23) eine Überlagerung von mindestens einem ersten periodischen Muster (21) mit einer ersten Phase und einem zweiten periodischen Muster (22) mit einer zweiten Phase ist
wobei sich die erste Phase und die zweite Phase voneinander unterscheiden, und **dadurch gekennzeichnet, dass** die Messmusterphase ein ganzzahliges Vielfaches des kleinsten gemeinsamen Vielfachen der ersten Phase und der zweiten Phase ist,
wobei das Bestimmen der Höhenkarte ferner für jedes Pixel des optischen Detektors Folgendes umfasst:
- Durchführen einer Fourier-Transformation an dem detektierten Signal, wodurch das detektierte Signal in einen Frequenzraum transformiert wird;
- Trennen des detektierten Signals in ein erstes Vorsignal in Bezug auf das erste periodische Muster (21) und ein zweites Vorsignal in Bezug auf das zweite periodische Muster (22);
- unabhängiges Durchführen einer inversen Fourier-Transformation an sowohl dem ersten Vorsignal als auch dem zweiten Vorsignal;
- Bestimmen einer ersten Vorabkarte durch Bestimmen einer Höhe der Prüffläche basierend auf dem ersten Vorsignal, z. B. durch Bestimmen einer ersten Amplitude des ersten Vorsignals an jedem Pixel und Bestimmen einer Abtastposition, in der die erste Amplitude maximal ist;
- Bestimmen einer zweiten Vorabkarte durch Bestimmen einer Höhe der Prüffläche basierend auf dem zweiten Vorsignal, z. B. durch Bestimmen einer zweiten Amplitude des zweiten Signals an jedem Pixel und Bestimmen einer Abtastposition, in der die zweite Amplitude maximal ist; und
- Bestimmen der Höhenkarte basierend auf der ersten Vorabkarte und der zweiten Vorabkarte.

2. Verfahren nach Anspruch 1, wobei an jeder Abtastposition nur ein einziges Bild aufgenommen wird und wobei das Messmuster mit einer einzigen Phase zwischen Abtastpositionen phasenverschoben wird.

3. Verfahren nach einem oder mehreren der vorhergehenden Ansprüche, wobei das Messmuster, das erste periodische Muster und/oder das zweite periodische Muster ein binäres Streifenmuster oder ein sinusförmiges periodisches Muster ist.

4. Verfahren nach einem oder mehreren der vorhergehenden Ansprüche, wobei das erste periodische Muster eine größere Streifenbreite aufweist und das zweite periodische Muster eine kleinere Streifenbreite aufweist.

5. Verfahren nach einem oder mehreren der vorhergehenden Ansprüche, wobei das erste periodische Muster in einer ersten Richtung parallel zu der Prüffläche periodisch ist und das zweite periodische Muster in einer zweiten Richtung parallel zu der Prüffläche periodisch ist, wobei z. B. die erste Richtung senkrecht zu der zweiten Richtung ist, und wobei die Phasenverschiebung eine Phasenverschiebung des Messmusters in der ersten Richtung parallel zu der Prüffläche und in der zweiten Richtung parallel zu der Prüffläche gemäß den jeweiligen Phasen umfasst.

6. Mikroskop (1) mit strukturierter Beleuchtung zum Bestimmen einer Höhenkarte einer Prüffläche, das Folgendes umfasst:
- eine Lichtquelle (2) zum Emittieren eines Lichtstrahls (3);
- einen räumlichen Lichtmodulator (4) zum Modulieren des durch die Lichtquelle emittierten Lichtstrahls;
- einen Prüfflächenhalter zum Halten einer Prüffläche (8);
- Abtastmittel (7), um den modulierten Lichtstrahl auf die Prüffläche in dem Prüfflächenhalter zu richten, wobei die Abtastmittel und der Prüfflächenhalter in einer Richtung parallel zu dem Lichtstrahl relativ zueinander zwischen unterschiedlichen Abtastpositionen beweglich sind;
- einen optischen Detektor (11) zum Detektieren eines reflektierten Lichtstrahls, der durch eine in dem Prüfflächenhalter bereitgestellte Prüffläche reflektiert wird; und
- einen Prozessor (12), der mit dem räumlichen Lichtmodulator, den Abtastmitteln und dem optischen Detektor verbunden ist,
wobei das Mikroskop zu Folgendem ausgelegt ist, wenn die Prüffläche in dem Prüfflächenhalter bereitgestellt ist:
- Emittieren eines Lichtstrahls (3) von der Lichtquelle und Modulieren des durch die Lichtquelle emittierten Lichtstrahls mit dem räumlichen Lichtmodulator, um ein Messmuster (23) zu erzeugen, das in einer Richtung senkrecht zu dem Lichtstrahl periodisch ist, und wobei das Messmuster eine Messmusterphase aufweist;
- Richten des modulierten Lichtstrahls auf die Prüffläche mit den Abtastmitteln;
- Bewegen der Abtastmittel zwischen den unterschiedlichen Abtastpositionen und Modulieren des Lichtstrahls mit dem räumlichen Lichtmodulator derart, dass das Messmuster in der Richtung senkrecht zu dem Lichtstrahl gemäß der Messmusterphase phasenverschoben wird;
- Detektieren des reflektierten Lichtstrahls für jede Abtastposition und jede Phasenverschiebung mit dem optischen Detektor, wodurch sich ein detektiertes Signal ergibt; und
- Bestimmen, durch den Prozessor, einer Höhenkarte der Prüffläche durch Bestimmen einer Höhe der Prüffläche basierend auf dem detektierten Signal, z. B. basierend auf einem Bestimmen einer Amplitude des detektierten Signals an dem entsprechenden Pixel und Bestimmen einer Abtastposition, in der die Amplitude maximal ist,
wobei der Lichtstrahl derart moduliert wird, dass das Messmuster (23) eine Überlagerung von mindestens einem ersten periodischen Muster (21) mit einer ersten Phase und einem zweiten periodischen Muster (22) mit einer zweiten Phase ist
wobei sich die erste Phase und die zweite Phase voneinander unterscheiden, und **dadurch gekennzeichnet, dass** die Messmusterphase ein ganzzahliges Vielfaches des kleinsten gemeinsamen Vielfachen der ersten Phase und der zweiten Phase ist,
wobei der Prozessor beim Bestimmen der Höhenkarte für jedes Pixel des optischen Detektors zu Folgendem ausgelegt ist:
- Durchführen einer Fourier-Transformation an dem detektierten Signal, wodurch das detektierte Signal in einen Frequenzraum transformiert wird;
- Trennen des detektierten Signals in ein erstes Vorsignal in Bezug auf das erste periodische Muster und ein zweites Vorsignal in Bezug auf das zweite periodische Muster;
- unabhängiges Durchführen einer inversen Fourier-Transformation an sowohl dem ersten Vorsignal als auch dem zweiten Vorsignal;
- Bestimmen einer ersten Vorabkarte durch Bestimmen einer Höhe der Prüffläche basierend auf dem ersten Vorsignal, z. B. durch Bestimmen einer ersten Amplitude des ersten Signals an jedem Pixel und Bestimmen einer Abtastposition, in der die erste Amplitude maximal ist;
- Bestimmen einer zweiten Vorabkarte durch Bestimmen einer Höhe der Prüffläche basierend auf dem zweiten Vorsignal, z. B. durch Bestimmen einer zweiten Amplitude des zweiten Signals an jedem Pixel und Bestimmen einer Abtastposition, in der die zweite Amplitude maximal ist; und
- Bestimmen der Höhenkarte basierend auf der ersten Vorabkarte und der zweiten Vorabkarte.

7. Mikroskop mit strukturierter Beleuchtung nach Anspruch 6, wobei das Mikroskop dazu ausgelegt ist, an jeder Abtastposition nur ein einziges Bild aufzunehmen, und wobei das Mikroskop dazu ausgelegt ist, die Messung mit einer einzigen Phase zwischen Abtastpositionen phasenzuverschieben.

8. Mikroskop mit strukturierter Beleuchtung nach einem oder mehreren der Ansprüche 6-7, wobei das erste periodische Muster und/oder das zweite periodische Muster ein binäres Streifenmuster oder ein sinusförmiges periodisches Muster ist.

9. Mikroskop mit strukturierter Beleuchtung nach einem oder mehreren der Ansprüche 6-8, wobei das erste periodische Muster eine größere Streifenbreite aufweist und das zweite periodische Muster eine kleinere Streifenbreite aufweist.

10. Mikroskop mit strukturierter Beleuchtung nach einem oder mehreren der Ansprüche 6-9, wobei das erste periodische Muster in einer ersten Richtung parallel zu der Prüffläche periodisch ist und das zweite periodische Muster in einer zweiten Richtung parallel zu der Prüffläche periodisch ist, wobei z. B. die erste Richtung senkrecht zu der zweiten Richtung ist, und wobei das Mikroskop mit strukturierter Beleuchtung dazu ausgelegt ist, das Messmuster in der ersten Richtung parallel zu der Prüffläche und in der zweiten Richtung parallel zu der Prüffläche gemäß den jeweiligen Phasen phasenzuverschieben.

## Revendications

1. Procédé de détermination d'une carte de hauteur d'une surface d'essai (8) au moyen d'un microscope à éclairage structuré (1) comprenant :
- une source lumineuse (2) pour émettre un faisceau lumineux (3) ;
- un modulateur spatial de lumière (4) pour moduler le faisceau lumineux émis par la source lumineuse ;
- un support de surface d'essai pour maintenir une surface d'essai (8) ;
- des moyens de balayage (7) pour diriger le faisceau lumineux modulé vers la surface d'essai dans le support de surface d'essai, les moyens de balayage et le support de surface d'essai étant mobiles l'un par rapport à l'autre entre différentes positions de balayage dans une direction parallèle au faisceau lumineux ;
- un détecteur optique (11) pour détecter un faisceau lumineux réfléchi, réfléchi par une surface d'essai disposée dans le support de surface d'essai ; et
- un processeur (12) relié au détecteur optique,
le procédé comprenant :
- la mise en place de la surface d'essai dans le support de surface d'essai du microscope à éclairage structuré ;
- l'émission d'un faisceau lumineux à partir de la source lumineuse et la modulation du faisceau lumineux émis par la source lumineuse au moyen du modulateur spatial de lumière pour générer un motif de mesure (23) qui est périodique dans une direction perpendiculaire au faisceau lumineux, ce motif de mesure présentant une phase de motif de mesure ;
- le fait de diriger le faisceau lumineux modulé vers la surface d'essai au moyen des moyens de balayage ;
- le déplacement des moyens de balayage entre les différentes positions de balayage et la modulation du faisceau lumineux au moyen du modulateur spatial de lumière de sorte que le motif de mesure est déphasé dans la direction perpendiculaire au faisceau lumineux en fonction de la phase de motif de mesure ;
- la détection du faisceau lumineux réfléchi pour chaque position de balayage et chaque déphasage au moyen du détecteur optique, ce qui donne un signal détecté, par exemple dans chaque pixel du détecteur optique ; et
- la détermination d'une carte de hauteur de la surface d'essai, par le processeur, en déterminant une hauteur de la surface d'essai sur la base du signal détecté, par exemple sur la base de la détermination d'une amplitude du signal détecté au niveau du pixel correspondant et de la détermination d'une position de balayage à laquelle l'amplitude est maximale,
le faisceau lumineux étant modulé de sorte que le motif de mesure (23) est une superposition d'au moins un premier motif périodique (21) ayant une première phase et d'un second motif périodique (22) ayant une seconde phase,
la première phase et la seconde phase étant différentes l'une de l'autre, et **caractérisé en ce que** la phase de motif de mesure est un multiple entier du plus petit commun multiple de la première phase et de la seconde phase,
la détermination de la carte de hauteur comprenant en outre, pour chaque pixel du détecteur optique :
- la réalisation d'une transformation de Fourier sur le signal détecté, transformant le signal détecté dans l'espace fréquentiel ;
- la séparation du signal détecté en un premier présignal lié au premier motif périodique (21) et un second présignal lié au second motif périodique (22) ;
- la réalisation d'une transformation de Fourier inverse indépendamment sur chacun du premier présignal et du second présignal ;
- la détermination d'une première précarte en déterminant une hauteur de la surface d'essai sur la base du premier présignal, par exemple en déterminant une première amplitude du premier présignal au niveau de chaque pixel et en déterminant une position de balayage à laquelle la première amplitude est maximale ;
- la détermination d'une seconde précarte en déterminant une hauteur de la surface d'essai sur la base du second présignal, par exemple en déterminant une seconde amplitude du second signal au niveau de chaque pixel et en déterminant une position de balayage à laquelle la seconde amplitude est maximale ; et
- la détermination de la carte de hauteur sur la base de la première précarte et de la seconde précarte.

2. Procédé selon la revendication 1, une seule image étant prise à chaque position de balayage et le motif de mesure étant déphasé d'une seule phase entre les positions de balayage.

3. Procédé selon une ou plusieurs des revendications précédentes, le motif de mesure, le premier motif périodique et/ou le second motif périodique étant un motif à bandes binaire ou un motif périodique sinusoïdal.

4. Procédé selon une ou plusieurs des revendications précédentes, le premier motif périodique ayant une largeur de frange plus grande et le second motif périodique ayant une largeur de frange plus petite.

5. Procédé selon une ou plusieurs des revendications précédentes, le premier motif périodique étant périodique dans une première direction parallèle à la surface d'essai et le second motif périodique étant périodique dans une seconde direction parallèle à la surface d'essai, par exemple la première direction étant perpendiculaire à la seconde direction, et le déphasage comprenant le déphasage du motif de mesure dans la première direction parallèle à la surface d'essai et dans la seconde direction parallèle à la surface d'essai en fonction des phases respectives.

6. Microscope à éclairage structuré (1) pour déterminer une carte de hauteur d'une surface d'essai, comprenant :
- une source lumineuse (2) pour émettre un faisceau lumineux (3) ;
- un modulateur spatial de lumière (4) pour moduler le faisceau lumineux émis par la source lumineuse ;
- un support de surface d'essai pour maintenir une surface d'essai (8) ;
- des moyens de balayage (7) pour diriger le faisceau lumineux modulé vers la surface d'essai dans le support de surface d'essai, les moyens de balayage et le support de surface d'essai étant mobiles l'un par rapport à l'autre entre différentes positions de balayage dans une direction parallèle au faisceau lumineux ;
- un détecteur optique (11) pour détecter un faisceau lumineux réfléchi, réfléchi par une surface d'essai disposée dans le support de surface d'essai ; et
- un processeur (12) relié au modulateur spatial de lumière, aux moyens de balayage et au détecteur optique,
le microscope étant configuré pour, lorsque la surface d'essai est disposée dans le support de surface d'essai :
- émettre un faisceau lumineux (3) à partir de la source lumineuse et moduler le faisceau lumineux émis par la source lumineuse au moyen du modulateur spatial de lumière pour générer un motif de mesure (23) qui est périodique dans une direction perpendiculaire au faisceau lumineux, ce motif de mesure présentant une phase de motif de mesure ;
- diriger le faisceau lumineux modulé vers la surface d'essai au moyen des moyens de balayage ;
- déplacer les moyens de balayage entre les différentes positions de balayage et moduler le faisceau lumineux au moyen du modulateur spatial de lumière de sorte que le motif de mesure est déphasé dans la direction perpendiculaire au faisceau lumineux en fonction de la phase de motif de mesure ;
- détecter le faisceau lumineux réfléchi pour chaque position de balayage et chaque déphasage au moyen du détecteur optique, ce qui donne un signal détecté ; et
- déterminer, par le processeur, une carte de hauteur de la surface d'essai en déterminant une hauteur de la surface d'essai sur la base du signal détecté, par exemple sur la base de la détermination d'une amplitude du signal détecté au niveau du pixel correspondant et de la détermination d'une position de balayage à laquelle l'amplitude est maximale,
le faisceau lumineux étant modulé de sorte que le motif de mesure (23) est une superposition d'au moins un premier motif périodique (21) ayant une première phase et d'un second motif périodique (22) ayant une seconde phase,
la première phase et la seconde phase étant différentes l'une de l'autre, et **caractérisé en ce que** la phase de motif de mesure est un multiple entier du plus petit commun multiple de la première phase et de la seconde phase, le processeur étant configuré pour, lors de la détermination de la carte de hauteur, pour chaque pixel du détecteur optique :
- réaliser une transformation de Fourier sur le signal détecté, transformant le signal détecté dans l'espace fréquentiel ;
- séparer le signal détecté en un premier présignal lié au premier motif périodique et un second présignal lié au second motif périodique ;
- réaliser une transformation de Fourier inverse indépendamment sur chacun du premier présignal et du second présignal ;
- déterminer une première précarte en déterminant une hauteur de la surface d'essai sur la base du premier présignal, par exemple en déterminant une première amplitude du premier signal au niveau de chaque pixel et déterminer une position de balayage à laquelle la première amplitude est maximale ;
- déterminer une seconde précarte en déterminant une hauteur de la surface d'essai sur la base du second présignal, par exemple en déterminant une seconde amplitude du second signal au niveau de chaque pixel et en déterminant une position de balayage à laquelle la seconde amplitude est maximale ; et
- déterminer la carte de hauteur sur la base de la première précarte et de la seconde précarte.

7. Microscope à éclairage structuré selon la revendication 6, le microscope étant configuré pour ne prendre qu'une seule image à chaque position de balayage et le microscope étant configuré pour déphaser la mesure d'une seule phase entre les positions de balayage.

8. Microscope à éclairage structuré selon une ou plusieurs des revendications 6 et 7, le premier motif périodique et/ou le second motif périodique étant un motif à bandes binaire ou un motif périodique sinusoïdal.

9. Microscope à éclairage structuré selon une ou plusieurs des revendications 6 à 8, le premier motif périodique ayant une largeur de frange plus grande et le second motif périodique ayant une largeur de frange plus petite.

10. Microscope à éclairage structuré selon une ou plusieurs des revendications 6 à 9, le premier motif périodique étant périodique dans une première direction parallèle à la surface d'essai et le second motif périodique étant périodique dans une seconde direction parallèle à la surface d'essai, par exemple la première direction étant perpendiculaire à la seconde direction, et le microscope à éclairage structuré étant configuré pour déphaser le motif de mesure dans la première direction parallèle à la surface d'essai et dans la seconde direction parallèle à la surface d'essai en fonction des phases respectives.
